Europäisches Patentamt

**European Patent Office**

**Office européen des brevets**

(11) Publication number: **0 027 353**
**A1**

# EUROPEAN PATENT APPLICATION

(21) Application number: **80303549.2**

(22) Date of filing: **09.10.80**

(51) Int. Cl.³: **G 07 F 17/34**
**G 01 P 13/04**

(30) Priority: **11.10.79 GB 7935354**

(43) Date of publication of application:
**22.04.81 Bulletin 81/16**

(84) Designated Contracting States:
**AT CH DE FR GB LI NL SE**

(71) Applicant: **Bell-Fruit Manufacturing Company Limited**
**Leen Gate Lenton**
**Nottingham NG7 2ND(GB)**

(72) Inventor: **Budd, Frank**
**34 Sloane Drive**
**Bramcote, Nottingham(GB)**

(74) Representative: **Duncan, Angus Henry et al,**
**Barker, Brettell & Duncan 138 Hagley Road**
**Edgbaston Birmingham, B16 9PW(GB)**

(54) Gaming and amusement machines.

(57) In a fruit machine, means sensing the positions in which symbol carriers (R) stop can accommodate rotation of the carrier in either direction.

Associated with each carrier, two photo-electric cells (P1, P2) are each arranged to receive pulses of light from a light source through one of two series of apertures (S) in a disc (D) which rotates with the carrier (R). The apertures are formed so that the cells (P1, P2) generate two trains of electrical pulses of the same frequency but out of synchronism. The pulses are fed as an activating signal to a counter which changes its state in step with rotation of the carrier. Since the trains are out of synchronism, the signal is assymetrical in time so that reversal of the rotation of the carrier causes a different signal to be sent to the counter. The two signals cause adjustment of the counter by an increment and a decrement, respectively.

FIG 1

1

## GAMING AND AMUSEMENT MACHINES

This invention is concerned with a gaming and amusement machine comprising a set of rotatable symbol carriers each of which is spun and stopped at random at one of a plurality of stop positions during each game to determine a symbol in a combination of symbols displayed to the player, and sensing means which senses the positions in which the carriers stop, the sensing means comprising pulse generating means associated with each carrier to generate electrical pulses as the carrier rotates to signal the movements of the carrier, and a counter associated with each pulse generating means to receive the pulses from the generating means so that the counter changes its state in step with rotation of the associated carrier and assumes a corresponding state for each of the stop positions of the carrier. The sensing means initiates a win signal for certain combinations of stop positions in which the set of carriers displays prize-winning combinations of symbols.

British Patent Specification No. 1 382 379 describes a gaming machine in which the position in which a carrier comes to rest is determined by counting, by electronic and photo-electric means, the number of possible stopping positions traversed by the carrier when it was last in motion. The photo-electric means generates a train of pulses which are fed to a counter which changes its state in a cyclic manner in step with rotation of the carrier, and so assumes a corresponding state for each of the possible stop positions of the carrier. The system as described is suitable only for unidirectional rotation of the carriers.

It is an object of the present invention to provide a gaming and amusement machine comprising sensing means which can accommodate rotation of the symbol carriers in
either of two opposite directions.

According to the invention, the pulse generating
means associated with each carrier is arranged so that a
different signal is sent to its associated counter with
rotation of its associated carrier in each of opposite
directions, so that the counter assumes the corresponding state for each of the stop positions of the
carrier in whichever direction the carrier is rotated.

A suitable signal difference can be arrived at by
employing pulse generating means which, with continuous
rotation of the associated carrier, generates two trains
of pulses which are of the same frequency but out of
synchronism; each pulse of one train can be paired with
a pulse of the other train to form a signal which is
assymetrical in time. The pulses of each pair may
overlap in time, and may be of equal duration.

The pulse generating means associated with each
carrier may conveniently be of a photo-electric kind.
In a preferred arrangement apertures are provided in a
disc which rotates with the carrier, and a light source
and photo-electric means are arranged on opposite sides
of the disc so that as the disc rotates light reaches
the photo-electric means, through the apertures, in
pulses.

There now follows a description, to be read with
reference to the accompanying drawings, of a gaming and
amusement machine which illustrates the invention by way
of example.

In the accompanying drawings :-

Figure 1 is a diagrammatic view showing an arrangement of photo-electric cells and disc slots of sensor means of the machine; and

Figure 2 illustrates one possible alternative arrangement for the disc slots.

The machine, familiarly known as a fruit machine, comprises a set of rotatable symbol carriers, in the form of reels R, which bear (on circumferential surfaces) fruit symbols for display through a window to a player. The reels R can each be spun and stopped at random at one of twelve stop positions during each game, to determine one symbol in a combination of symbols displayed to the player by the reels. Certain combinations of symbols are prize-winning combinations, and the machine comprises sensing means which senses the positions in which the reels stop and initiates a win signal for certain combinations of stop positions in which the set of reels displays prize-winning combinations of symbols. The machine, as so far referred to, is of a well-known kind of construction.

The sensing means of the machine comprises pulse generating means associated with each reel R. Each pulse generating means comprises a disc D which has indexing slots in the form of circumferentially equispaced peripheral notches N, the disc being mounted co-axially and fast with the reel R which carries the fruit symbols, the number of symbols being equal to the number of notches on the disc. The reel and disc are arranged to be rotated by mechanical means (e.g. a motor) and stopped by a relay-operated latch L, which co-operates with the notches N on the periphery of the disc.

4

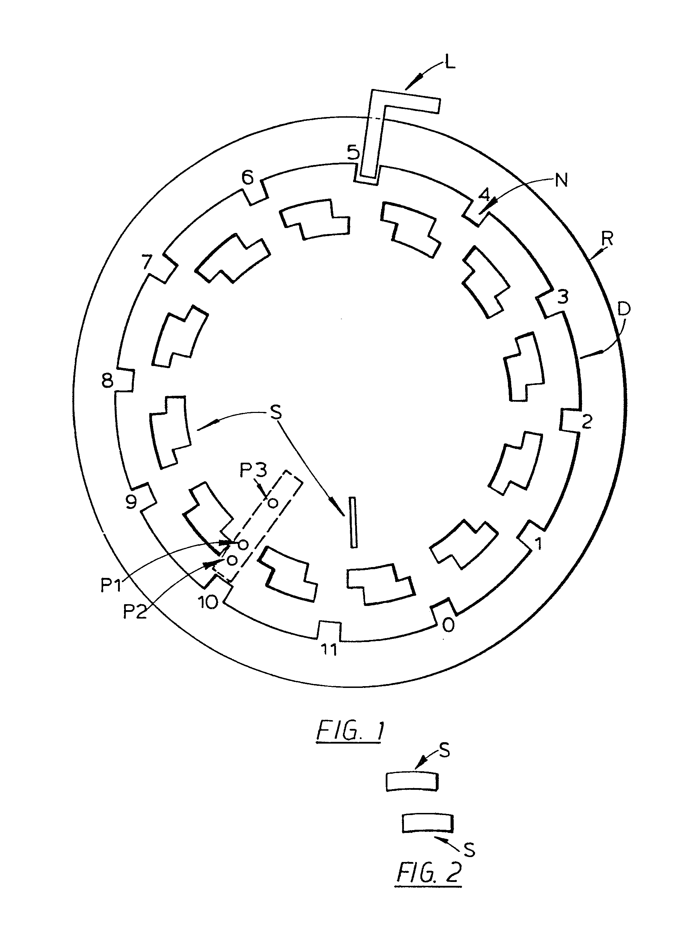

Associated with each reel R, the sensing means
comprises three photo-electric cells P1, P2, P3 arranged
on one side of the disc, and individual light sources
(not shown) arranged on the opposite side of the disc D
opposite the cells P1, P2, P3. The disc D serves as a
shielding member and apertures in the form of slots S
are arranged in the disc to allow light to reach the
photo-electric cells P1, P2, P3 in pulses as the disc
rotates; rotation of the disc thus causes the photo-
electric cells to give outputs in the form of electrical
pulses which signal the movements of the reel, the
frequency of the pulses being dependent on the speed of
rotation of the disc and the number of pulses being
dependent on the angular movement of the disc. The
pulses are fed to a micro-processor control unit to
interpret the pulse output, the control unit comprising
an electronic counter, associated with each reel R, to
receive the pulses so that the counter changes its state
cyclically in step with rotation of the reel, and assumes
a corresponding state for each of the stop positions of
the reel. Figure 1 shows slots S in a preferred arrangement but Figure 2 shows a possible alternative arrangement, the slots in each case providing two series of
apertures allocated to photo-electric cells P1 and P2.
It may be convenient to have more than one slot allocated to photo-electric cell P3. Figure 1 shows a disc
which has twelve possible stopping positions, but other
machines might have any suitable number of stopping
positions.

The pulses from P1 and P2 clock the electronic
counter, and the number held in store in the counter
corresponds to a stopping position of the disc. Pulses
from P3 return the counter to zero, so, in the arrangement shown, and assuming constant and unidirectional
rotation, the electronic counter would be clocked so as to count from 0 - 11 and then be restored to zero during each revolution of the disc.

The arrangement of the cells P1 and P2 and the slots S is such that the pulse generating means generates, with continuous rotation of the reel R, two trains of pulses, through the cells P1 and P2, which are of the same frequency but out of synchronism. Each pulse of one train, induced by light passing through one slot S to one of the cells P1 and P2, is paired with a pulse of the other train, induced by light passing through the same slot S to the other of the cells P1 and P2, to form a signal which is assymetrical in time. With the forms of slot S shown in Figures 1 and 2, the pulses of each pair overlap in time, and are of equal duration.

The outputs from the photo-electric cells are 'High' (1) when not receiving light, so that the pulses from P1 and P2 follow the pattern in the table below for one twelfth of a revolution of the disc in a clockwise direction (as seen in Figure 1):

| CELL | STARTING POSITION | 30° ROTATION | Stopping Position |
|------|-------------------|--------------|-------------------|
| P1 | 1 | 0 0 1 | 1 |
| P2 | 1 | 1 0 0 | 1 |

The counter of the micro-processor, arranged to store the reel position, is arranged to be adjusted by an increment each time the signal 1 0 0 1
                                   1 1 0 0
is received.  The counter is of course returned to the
zero state whenever a pulse is received from P3.

It will be observed that when the disc is rotated
counter-clockwise, the signal formed by the two trains
of pulses is 1 1 0 0
             1 0 0 1,
and this is arranged to adjust the counter by a decrement.
It is thus arranged that a different signal is sent to
the counter with rotation of the reel R in each of the
opposite directions, so that the counter assumes the
corresponding state for each of the stop positions of
the reel in whichever direction the reel is rotated.

If required the sensing means could be arranged to
monitor the state of the counter more frequently than
once per revolution.  For that purpose four slots could
be positioned in the disc D, for co-operation with the
photo-electric cell P3, the slots being arranged at
positions in which the coincidence of P1, P2, P3 is
respectively 1-1-1, 1-1-0, 1-0-0 and 1-0-1.

CLAIMS

1.    A gaming and amusement machine comprising a set of
rotatable symbol carriers each of which is spun and
stopped at random at one of a plurality of stop positions during each game to determine a symbol in a combination of symbols displayed to the player, and sensing
means which senses the positions in which the carriers
stop, the sensing means comprising pulse generating
means associated with each carrier to generate electrical pulses as the carrier rotates to signal the movements of the carrier, and a counter associated with each
pulse generating means to receive the pulses from the
generating means so that the counter changes its state
in step with rotation of the associated carrier and
assumes a corresponding state for each of the stop
positions of the carrier, characterised in that the
pulse generating means (P1, P2, S) associated with each
carrier (R) is arranged so that a different signal is
sent to its associated counter with rotation of its
associated carrier in each of opposite directions, so
that the counter assumes the corresponding state for
each of the stop positions of the carrier in whichever
direction the carrier is rotated.

2.    A machine according to Claim 1 further characterised
in that the pulse generating means generates two trains
of pulses which are of the same frequency but out of
synchronism, so that each pulse of one train can be
paired with a pulse of the other train to form a signal
which is assymetrical in time.

3.    A machine according to Claim 2 further characterised
in that it comprises two photo-electric cells (P1, P2)
for generation of the two trains of pulses, the cells
receiving pulses of light from a light source through two

8

series of apertures(S) in a shielding member as relative movement occurs between the cells and the shielding member with rotation of the carrier (R).

1/1

_FIG. 1_

_FIG. 2_

European Patent
Office

**EUROPEAN SEARCH REPORT**

Application number

EP 80 30 3549

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| D | GB - A - 1 382 379 (BELL-FRUIT) <br> * Claims and figures * <br><br> -- | 1 | G 07 F 17/34 <br> G 01 P 13/04 |
| | DE - B - 1 119 381 (PHILIPS) <br> * Column 1, lines 1-28; column 1, line 40 - column 2, line 42, figures 1 and 6 * <br><br> -- | 1-3 | |
| | US - A - 2 685 082 (W.W. BEMAN) <br> * Figures 1,2,11 and 13; column 1, line 1- column 2, line 33 * <br><br> -- | 1-3 | **TECHNICAL FIELDS SEARCHED (Int. Cl.³)** <br><br> G 07 F 17/34 <br> G 01 P 13/02 <br> 13/04 |
| A | US - A - 4 071 246 (D.C. HOOKER) <br> * Abstract; figure 5 * <br><br> -- | 1 | |
| A | GB - A - 1 471 866 (A. SHAW) <br> * Page 3, line 52 - page 4, line 60; figure * <br><br> -- | 1 | |
| A | DE - B - 2 232 107 (NSM-APPARATE-BAU) <br> * Column 2, line 45 - column 3, line 53; figures * <br><br> ---- | 1 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 15-01-1981 | DAVID |

EPO Form 1503.1  06.78